# EUROPÄISCHE PATENTANMELDUNG

(11) **EP 2 400 296 A2**
(43) Veröffentlichungstag der Anmeldung: **28.12.2011**
(21) Anmeldenummer: 11170297.3
(22) Anmeldetag: 17.06.2011
(51) Int. Cl.: G01N 29/14

(54) **Verfahren und Vorrichtung zur Schallemissionskontrolle von Rastverbindungen**

(30) Priorität: 23.06.2010 DE 102010024794
(71) Anmelder: SMR Patents S.à.r.l., 1653 Luxembourg (LU)
(72) Erfinder: Müller, Otto, 73344 Gruibingen (DE)
(74) Vertreter: Weber-Bruls, Dorothée

(57) **Zusammenfassung**

Es wird ein Verfahren zur Kontrolle einer ordnungsgemäßen Herstellung einer Rastverbindung (10) zwischen mindestens zwei Bauelementen (13, 14) und/oder Bauelementegruppen (15, 16) beispielsweise einer Kraftfahrzeugleuchte beschrieben, welches Verfahren die Verfahrensschritte:
- Erfassung mindestens eines bei einer ordnungsgemäßen Herstellung wenigstens einer Rastverbindung (10) entstehendes Rastgeräuschs (17),
- Speicherung des mindestens einen Rastgeräuschs (17),
- Überwachung des Verbindens zweier oder mehrerer mit korrespondierenden Rastelementen (11, 12) wenigstens einer Rastverbindung (10) versehener Bauelemente (13, 14) und/oder Bauelementegruppen (15, 16) unter Erfassung der dabei entstehenden und/oder vorhandenen Geräusche (18), sowie
- Vergleich zumindest eines Teils der bei der Überwachung erfassten Geräusche (18) mit dem mindestens einen gespeicherten Rastgeräusch (17)

umfasst, wobei bei einer Übereinstimmung zumindest eines Teils der bei der Überwachung erfassten Geräusche (18) mit dem mindestens einen gespeicherten Rastgeräusch (17) das Ergebnis des Vergleichs eine ordnungsgemäße Herstellung der wenigstens einen Rastverbindung (10) ist. Darüber hinaus wird eine Vorrichtung (01) zur Durchführung eines solchen Verfahrens beschrieben.

## Beschreibung

Die Erfindung betrifft ein Verfahren und eine Vorrichtung zur Kontrolle einer ordnungsgemäßen Herstellung einer Rastverbindung zwischen zwei Bauelementen und/oder Bauelementegruppen einer Kraftfahrzeugleuchte gemäß dem Oberbegriff des Anspruchs 1 bzw. gemäß dem Oberbegriff des Anspruchs 10.

Eine Kraftfahrzeugleuchte erfüllt je nach Ausgestaltung eine oder mehrere Aufgaben bzw. Funktionen, wie beispielsweise bei einer Ausgestaltung als Scheinwerfer eine die Fahrbahn ausleuchtende Funktion, oder bei einer Ausgestaltung als Signalleuchte eine Signalfunktion, wie beispielsweise zur Fahrtrichtungsanzeige oder Anzeige einer Bremstätigkeit, oder einer Sicherstellung einer Sichtbarkeit des Kraftfahrzeugs bei Tag und/oder Nacht, wie etwa bei einer Ausgestaltung als Tagfahrleuchte. Die jeweiligen Aufgaben bzw. Funktionen werden durch eine oder mehrere Lichtfunktionen einer Kraftfahrzeugleuchte erfüllt, für die jeweils gültige gesetzliche Bestimmungen einzuhalten sind.

Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte "Central, High-Mounted Braking Lights", Tagfahrleuchten, Scheinwerfer und auch als Abbiege- oder Kurvenlicht verwendete Nebelscheinwerfer, sowie Kombinationen hiervon.

Eine zur Erfüllung einer oder mehrerer der beispielsweise Eingangs erwähnten Lichtfunktionen vorgesehene Kraftfahrzeugleuchte besteht aus mehreren Bauelementen.

Beispielsweise besteht eine Kraftfahrzeugleuchte im Wesentlichen aus einem einoder mehrteiligen Leuchtengehäuse, mindestens einem darin angeordneten Leuchtmittel zur Erfüllung wenigstens einer Lichtfunktion, gegebenenfalls einem typischerweise hinter dem Leuchtmittel in dem Leuchtengehäuse angeordneten Reflektor und/oder einem vor dem Leuchtmittel angeordnete Optikelement, wie etwa einer Linse, einem Rinnenkonzentrator, z.B. einer Parabolrinne (CPC; Compound Parabolic Concentrator) oder dergleichen zur Ausformung einer definierten Abstrahlcharakteristik, sowie einer das Leuchtmittel und gegebenenfalls den Reflektor bzw. das Optikelement gegen Witterungseinflüsse schützenden, kurz auch als Lichtscheibe bezeichneten transparenten Abdeckung. Die Lichtscheibe umschließt gemeinsam mit dem Leuchtengehäuse einen das Leuchtmittel und gegebenenfalls den Reflektor aufnehmenden Leuchteninnenraum. In dem Leuchteninnenraum kann zwischen Leuchtmittel und Lichtscheibe eine Optikscheibe angeordnet sein, welche beispielsweise eine bestimmte Struktur und/oder Maskierung aufweisen kann, beispielsweise um bei einer klaren, für einen Betrachter eine Tiefenwirkung bewirkenden Lichtscheibe das Leuchtmittel zu kaschieren. Das Leuchtengehäuse bzw. der Leuchteninnenraum kann in mehrere Kammern mit jeweils eigenen Leuchtmitteln, eventuell Reflektoren und/oder Optikscheiben, sowie gegebenenfalls Lichtscheiben unterteilt sein, von denen mehrere Kammern gleiche oder jede Kammer eine andere der oben beschriebenen Funktionen erfüllen kann.

Der Leuchteninnenraum kann gegenüber der Umgebung komplett abgeschlossen sein. Ebenso kann der Raum über eine oder mehrere Belüftungsöffnung oder über eine wasserundurchlässige Membran mit der Umgebung kommunizieren. Eine solche Kraftfahrzeugleuchte wird auch als geschlossene Leuchte bezeichnet. In einer anderen Ausführung kann die Kraftfahrzeugleuchte auch zum Fahrzeuginnenraum mehr oder weniger großflächig geöffnet sein. Eine solche Kraftfahrzeugleuchte wird auch als offene Leuchte bezeichnet.

Eine gegebenenfalls vorhandene Belüftung kann über einen am Gehäuse beispielsweise durch Spritzgießen oder als separates Teil angeordneten Belüftungsstutzen erfolgen, der mit einem Deckel zumindest teilweise verschlossen sein kann.

Ein zur Erfüllung einer Lichtfunktion der Kraftfahrzeugleuchte vorgesehenes Leuchtmittel kann eine oder mehrere Lichtquellen sowie einen oder mehrere, die mindestens eine Lichtquelle tragende sowie elektrisch kontaktierende Lichtquellenträger umfassen, sowie gegebenenfalls eine oder mehrere zumindest einer Lichtquelle zugeordnete Primäroptiken, beispielsweise einen Lichtleiter oder dergleichen.

Als Lichtquellen kommen beispielsweise Glühlampen und/oder Gasentladungslampen und/oder vermehrt auch einzeln oder gruppenweise angeordnete Leuchtdioden zum Einsatz. Letztere bestehen aus einem Lichtemittierende-Diode-Halbleiter-Chip, kurz LED-Chip, sowie einer beispielsweise durch Spritzgießen angeformten, den LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es wird explizit etwas anderes erwähnt. Herausragende Eigenschaften von LEDs im Vergleich zu anderen, konventionellen Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Leuchtmittel besonders kompakte Kraftfahrzeugleuchten verwirklicht werden, die an fast jede nur erdenkliche Einbausituation angepasst sein können.

Elektrische Verbindungen schließlich dienen der elektrischen Stromversorgung und der Ansteuerung der mindestens einen Lichtquelle des wenigstens einen zur Erfüllung zumindest einer Lichtfunktion vorgesehenen Leuchtmittels. Die elektrischen Verbindungen können beispielsweise einen z.B. geschützt auf der Rückseite des Leuchtengehäuses angeordneten elektrischen Anschluss zur Verbindung beispielsweise mit einem Steuergerät des Kraftfahrzeugs umfassen, sowie im Leuchteninnenraum beispielsweise auf oder in dem mindestens einen Lichtquellenträger angeordnete Leiterbahnen und/oder einen oder mehrere Kabelsätze umfassen. Eine elektrische Kontaktierung zwischen den verschiedenen Abschnitten der elektrischen Verbindungen kann mittels Steckverbindungen hergestellt sein.

Zusammengefasst besteht eine Kraftfahrzeugleuchte aus mehreren miteinander verbundenen Bauelementen und/oder Bauelementegruppen, wobei die Verbindungen zwischen den Bauelementen und/oder Bauelementegruppen mehr oder weniger gut einsehbar und/oder zugänglich bei der Montage der Kraftfahrzeugleuchte hergestellt werden müssen.

Ein Ziel bei der Entwicklung von Kraftfahrzeugleuchten ist deren kostengünstige Herstellung und einfache sowie zeitsparende Montage.

Um dieses Ziel zu erreichen, werden vermehrt Rastverbindungen zur Herstellung einer Verbindung zwischen zwei oder mehreren Bauelementen und/oder Bauelementegruppen verwendet. Eine Rastverbindung wird häufig auch als Klipsverbindung oder als Schnappverbindungen bezeichnet.

Eine Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind eine Hintergreifung und ein in diese eingreifendes elastisch verformbares Rastmittel. Die Hintergreifung kann beispielsweise durch eine Nut oder einen Absatz mit einem Rücksprung gebildet sein, wohingegen das elastisch verformbare Rastmittel aus einer Rastfeder mit einer am freien Ende der Rastfeder angeordneten Rastnase bestehen kann, welche Rastnase bei hergestellter Rastverbindung in die Hintergreifung reicht. Dank der Rastfeder kann die Rastnase während der Herstellung der Rastverbindung elastisch zurückfedern und bei Passieren der Hintergreifung in diese einfedern. Ebenfalls sind Rastverbindungen bekannt, welche ohne an einer Rastfeder angeordnete Rastnase auskommen, beispielsweise um ein in eine Führung oder Nut eingeschobenes Bauelement am Herausfallen aus der Führung oder Nut zu hindern. Die Hintergreifung wird hierbei einfach durch eine Kante des Bauelements gebildet. Ebenfalls ist bekannt, eine Rastnase an einem ersten freien Ende einer Rastschwinge anzuordnen, so dass durch Druck auf ein zweites freies Ende der Rastschwinge die Rastverbindung einfach wieder gelöst werden kann. Ein anderes Beispiel für korrespondierende Rastelemente ist ein an einem ersten Bauelement angeordneter Rastvorsprung bzw. eine Rastnase sowie ein elastisch verformbares Rastfenster. Hierbei weicht das elastisch verformbare Rastfenster bei der Herstellung der Rastverbindung dem Rastvorsprung bzw. der Rastnase aus und schwingt nach dem Passieren dahinter zurück. Das Rastfenster bildet hierbei gleichzeitig elastisch verformbares Element und Hintergreifung der Rastverbindung.

Ein bislang nur unter erheblichem technischem Aufwand zu lösendes Problem besteht in einer Kontrolle einer ordnungsgemäßen Herstellung einer Rastverbindung sowohl in einem manuellen Fertigungsprozess, als auch in einer z.B. wenigstens teilautomatisierten Fertigungsumgebung. Bisher wird die ordnungsgemäße Herstellung von Rastverbindungen entweder mittels geeigneter Taster oder Sensoren oder Kameras abgefragt oder es werden weg- oder kraftüberwachte Vorrichtungen eingesetzt.

Sowohl bei der manuellen Herstellung von Verbindungen zwischen Bauelementen beispielsweise einer Kraftfahrzeugleuchte mittels Rastverbindungen, als auch in zumindest teilautomatisierten Fertigungsumgebungen ist beispielsweise aus Platzgründen eine mechanische Abfrage einer ordnungsgemäßen Herstellung der Rastverbindung bzw. Rastverbindungen mit Tastern oder Sensoren oder Kamerasystemen oder weg- oder kraftüberwachte Vorrichtungen meist nur unter erheblichem Aufwand erschwert oder gar nicht möglich.

Der Erfindung liegt die Aufgabe zugrunde, ein Verfahren zur Kontrolle einer ordnungsgemäßen Herstellung mindestens einer Rastverbindung zwischen zwei Bauelementen und/oder Bauelementegruppen beispielsweise einer Kraftfahrzeugleuchte zu entwickeln, welches mit einfachen Mitteln möglichst sowohl in einem manuellen Fertigungsprozess, als auch in einer bestehenden z.B. wenigstens teilautomatisierten Fertigungsumgebung verwirklicht werden kann, sowie eine Vorrichtung zur Durchführung des Verfahrens.

Die Aufgabe wird gelöst durch ein Verfahren mit den Merkmalen des Anspruchs 1 bzw. durch eine Vorrichtung mit den Merkmalen des Anspruchs 10.

Ein erster Gegenstand der Erfindung sieht demnach ein Verfahren zur Kontrolle bzw. Überwachung einer ordnungsgemäßen Herstellung einer Rastverbindung zwischen mindestens zwei Bauelementen und/oder Bauelementegruppen beispielsweise einer Kraftfahrzeugleuchte vor, bei welchem Verfahren im Vorfeld zunächst mindestens ein bei einer ordnungsgemäßen Herstellung mindestens einer Rastverbindung entstehendes Rastgeräusch erfasst und anschließend dieses mindestens eine Rastgeräusch gespeichert wird. Im Anschluss hieran wird ein beispielsweise manueller oder zumindest teilautomatisierter Fertigungsprozess akustisch überwacht, indem beispielsweise mittels mindestens eines akustischen Sensors, beispielsweise einem oder mehreren Mikrofonen, zumindest die während des Verbindens zweier oder mehrerer mit korrespondierenden Rastelementen wenigstens einer Rastverbindung versehener Bauelemente und/oder Bauelementegruppen entstehenden und/oder vorhandenen Geräusche erfasst werden. Die erfassten Geräusche werden dann mit dem mindestens einen gespeicherten Rastgeräusch verglichen. Ergibt der Vergleich eine Übereinstimmung wenigstens eines Teils des erfassten Geräuschs mit zumindest einem gespeicherten Rastgeräusch, so erfolgte die Herstellung der mindestens eine Rastverbindung umfassenden Verbindung zweier oder mehrerer Bauelemente und/oder Bauelementegruppen derart ordnungsgemäß, dass die korrespondierenden Rastelemente der wenigstens einen Rastverbindung je nach Ausgestaltung der Rastverbindung lösbar oder unlösbar miteinander verrastet sind.

Beispielsweise zur Identifikation einer oder mehrerer bestimmter Rastverbindungen oder zur Verbesserung der Zuverlässigkeit des Vergleichs kann aus dem im Vorfeld durch Erfassung, Aufzeichnung und Speicherung ermittelten Rastgeräusch ein für die mindestens eine Rastverbindung charakteristischer Anteil vor oder nach dem Speichern herausgefiltert werden und dieser dann als charakteristisches Rastgeräusch gespeichert und/oder direkt zum Vergleich mit den während der akustischen Überwachung erfassten Geräuschen herangezogen werden.

Alternativ oder zusätzlich können die erfassten Geräusche vor dem Vergleich gefiltert werden. Eine Filterung kann beispielsweise Umgebungsgeräusche unterdrücken bzw. wegnehmen, beispielsweise durch Hoch- und/oder Tiefpassfilter und/oder durch Herausfiltern bzw. Unterdrücken bzw. Wegnehmen der für die menschliche Sprache typischen Frequenzen. Ebenfalls kann eine Filterung dahingehend erfolgen, dass Frequenzlagen und/oder Frequenzfolgen, welche außerhalb des Frequenzspektrums und/oder der Frequenzfolge des Rastgeräuschs oder des charakteristischen Rastgeräuschs liegen, unterdrückt bzw. weggenommen werden, so dass diese bei dem Vergleich nicht berücksichtigt werden.

Eine weitere Filterung kann erfolgen, indem während der Überwachung erst dann Geräusche erfasst und dem Vergleich zugeführt werden bzw. Berücksichtigung finden, wenn die miteinander zu verbindenden Bauelemente und/oder Bauelementegruppen beim Zusammenführen einen bestimmten Mindestabstand unterschreiten. Beispielsweise kann eine Aktivierung eines zur Erfassung der während des Verbindens zweier oder mehrerer Bauelemente und/oder Bauelementegruppen entstehenden bzw. vorhandenen Geräusche geeigneten akustischen Sensors oder eines den Vergleich durchführenden Algorithmus vorgesehen sein, wenn sich z.B. ein Aktuator odgl., welcher durch Zusammenführen zweier mit korrespondierenden Rastelementen versehener Bauelemente oder Bauelementegruppen die Rastverbindung herstellt, innerhalb eines bestimmten Positionsbereichs befindet, innerhalb dem mit einem Verrasten der Rastelemente der Rastverbindung zu rechnen ist.

Das Ergebnis des Vergleichs der erfassten Geräusche mit dem mindestens einen gespeicherten Rastgeräusch kann beispielsweise visuell oder akustisch ausgegeben werden. Die Ausgabe kann vorzugsweise am Montageort oder in unmittelbarer Umgebung des Montageorts stattfinden, an dem das Verbinden der zwei oder mehreren mit korrespondierenden Rastelementen der wenigstens einen Rastverbindung versehenen Bauelemente und/oder Bauelementegruppen erfolgt. Beispielsweise kann zur visuellen Ausgabe bei Übereinstimmung der erfassten Geräusche mit dem mindestens einen gespeicherten Rastgeräusch ein grünes Licht eine ordnungsgemäße Herstellung der mindestens einen Rastverbindung signalisieren. Alternativ oder zusätzlich kann beispielsweise ein rotes Licht signalisieren, dass die Rastelemente der wenigstens einen Rastverbindung nicht oder zumindest nicht wie zur ordnungsgemäßen Herstellung der Rastverbindung erforderlich vollständig miteinander verrastet sind.

Ein zweiter Gegenstand der Erfindung betrifft eine Vorrichtung zur Kontrolle bzw. Überwachung einer ordnungsgemäßen Herstellung einer Rastverbindung zwischen mindestens zwei Bauelementen und/oder Bauelementegruppen beispielsweise einer Kraftfahrzeugleuchte. Die Vorrichtung umfasst wenigstens:
- Mittel zur Erfassung zumindest eines während der Herstellung einer Rastverbindung entstehenden Rastgeräuschs,
- Speichermittel zur Speicherung des wenigstens einen Rastgeräuschs,
- Mittel zur Erfassung der während des Verbindens zweier oder mehrerer mit korrespondierenden Rastelementen wenigstens einer Rastverbindung versehener Bauelemente und/oder Bauelementegruppen entstehenden und/oder vorhandenen Geräusche, sowie
- Vergleichmittel zum Vergleich wenigstens eines Teils der erfassten Geräusche mit mindestens einem gespeicherten Rastgeräusch, um anhand einer Übereinstimmung ein ordnungsgemäßes Verrasten der Rastelemente der wenigstens einen Rastverbindung und damit eine ordnungsgemäße Herstellung der Rastverbindung festzustellen.

Die Mittel zur Erfassung zumindest eines während der Herstellung einer Rastverbindung entstehenden Rastgeräuschs können ebenso wie die Mittel zur Erfassung der während des Verbindens zweier oder mehrerer mit korrespondierenden Rastelementen wenigstens einer Rastverbindung versehener Bauelemente und/oder Bauelementegruppen entstehenden und/oder vorhandenen Geräusche mindestens einen akustischen Sensor, beispielsweise ein oder mehrere Mikrofone umfassen.

Die Mittel zur Erfassung zumindest eines während der Herstellung einer Rastverbindung entstehenden Rastgeräuschs können die Mittel zur Erfassung der während des Verbindens zweier oder mehrerer mit korrespondierenden Rastelementen wenigstens einer Rastverbindung versehener Bauelemente und/oder Bauelementegruppen entstehenden und/oder vorhandenen Geräusche bilden, diese umfassen oder von diesen umfasst werden.

Zusätzlich können Filtermittel vorgesehen sein zur Filterung wenigstens eines charakteristischen Rastgeräuschs aus dem mindestens einen während der Herstellung einer Rastverbindung entstehenden Rastgeräusch und/oder zur Filterung der während des Verbindens zweier oder mehrerer mit korrespondierenden Rastelementen wenigstens einer Rastverbindung versehener Bauelemente und/oder Bauelementegruppen entstehenden bzw. vorhandenen Geräusche.

Darüber hinaus kann ein zumindest mit den Mitteln zur Erfassung und mit den Speicher- sowie Vergleichsmitteln verbundener Mikroprozessor vorgesehen sein, welcher computerlesbare Programmmittel eines beispielsweise auf einem computerverwendbaren Medium gespeicherten Computerprogrammprodukts ausführen kann, welche bei Ausführung des Computerprogrammprodukts auf dem Mikroprozessor mit zugehörigen Speichermitteln oder auf einem mit geeigneten Mitteln zur Erfassung zumindest eines während der Herstellung einer Rastverbindung entstehenden Rastgeräuschs und/oder der während des Verbindens zweier oder mehrerer mit korrespondierenden Rastelementen wenigstens einer Rastverbindung versehener Bauelemente und/oder Bauelementegruppen entstehenden bzw. vorhandenen Geräusche verbundenen und/oder ausgestatteten Computer diesen zur Durchführung eines oben beschriebenen, erfindungsgemäßen Verfahrens veranlasst.

Es ist ersichtlich dass die Erfindung in jedem Fall durch eine akustische Überwachung verwirklicht ist, welche während der Montage bzw. Herstellung zumindest einer Rastverbindung die bestimmungsgemäße Herstellung der Rastverbindung anhand einer Erkennung eines eindeutigen, für die jeweilige Rastverbindung charakteristischen

### Rastgeräuschs überwacht.

Die Erfindung löst das Problem einer Kontrolle bzw. Überprüfung der bestimmungsgemäßen Verrastung korrespondierender Rastelemente einer Rastverbindung während der Montage bzw. Herstellung der Rastverbindung.

Sich hierdurch ergebende Vorteile gegenüber dem Stand der Technik sind unter anderem, dass mit einen Standardgerät beispielsweise in Form eines akustischen Aufnahme- bzw. Aufzeichnungsgeräts durch Anpassung der individuellen Tonfolge des Rastgeräusches jede einzelne Rastverbindung auf richtige Montage und Vollständigkeit überwacht werden kann. Dadurch kann auf den Einsatz einer nach dem Stand der Technik zur Kontrolle einer ordnungsgemäßen Herstellung einer Rastverbindung erforderlichen individuellen Fügevorrichtung bzw. einer weg- oder kraftüberwachten Vorrichtung oder individueller Sensor-, Taster- oder Kamerasysteme verzichtet werden.

Weitere Vorteile der Erfindung ergeben sich durch den Einsatz eines akustischen Überwachungssystems, welches auch an unzugänglichen Stellen eine sichere Erkennung des eindeutigen Rastgeräusches mittels eines Tonaufnehmers und einer Geräuscherkennungssoftware ermöglicht. Dadurch ist es möglich, die Herstellung von Rastverbindungen umfassenden Verbindungen zwischen zwei oder mehreren Bauelementen und/oder Bauelementegruppen auch bei Umwelteinflüssen sicher zu überwachen und zu dokumentieren. Das akustischen Überwachungssystem besteht hierbei zumindest aus Mitteln zur Erfassung zumindest eines während der Herstellung einer Rastverbindung entstehenden Rastgeräuschs sowie der während des Verbindens zweier oder mehrerer mit korrespondierenden Rastelementen wenigstens einer Rastverbindung versehener Bauelemente und/oder Bauelementegruppen entstehenden bzw. vorhandenen Geräusche, Speichermittel zur Speicherung des wenigstens einen Rastgeräuschs, sowie Vergleichmittel zum Vergleich wenigstens eines Teils der erfassten Geräusche mit mindestens einem gespeicherten Rastgeräusch, um anhand einer Übereinstimmung ein ordnungsgemäßes Verrasten der Rastelemente der wenigstens einen Rastverbindung und damit eine ordnungsgemäße Herstellung der Rastverbindung festzustellen.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Es zeigen in schematischer Darstellung:
- Fig. 1: ein Ablaufdiagramm eines Verfahrens zur Kontrolle bzw. Überwachung einer ordnungsgemäßen Herstellung einer Rastverbindung zwischen mindestens zwei Bauelementen und/oder Bauelementegruppen beispielsweise einer Kraftfahrzeugleuchte.
- Fig. 2: ein Blockdiagramm einer Vorrichtung zur Kontrolle bzw. Überwachung einer ordnungsgemäßen Herstellung einer Rastverbindung zwischen mindestens zwei Bauelementen und/oder Bauelementegruppen beispielsweise einer Kraftfahrzeugleuchte.

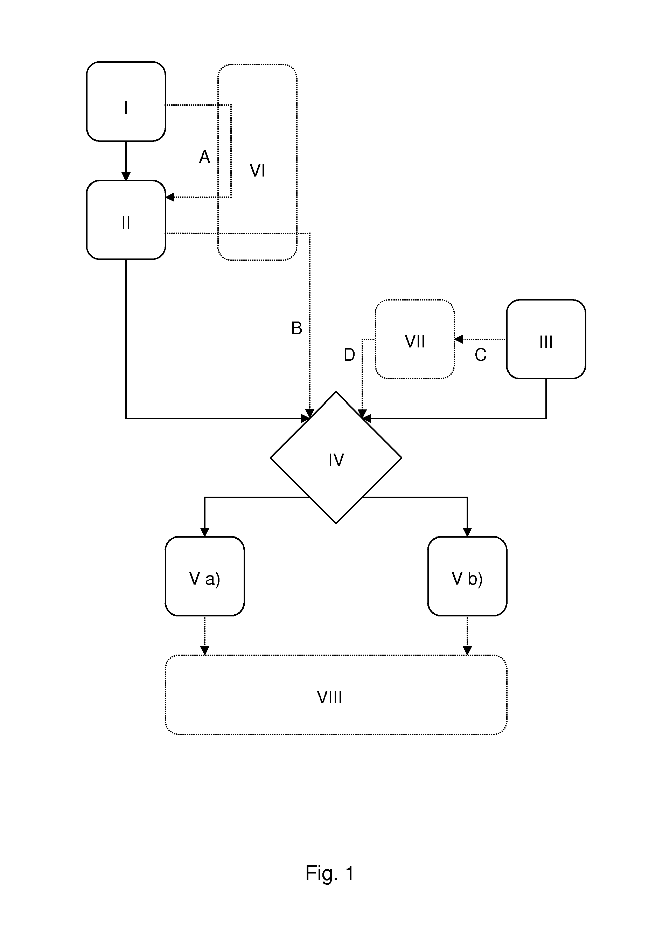

Ein in Fig. 1 schematisch in seinem Ablauf dargestelltes Verfahren zur Kontrolle einer ordnungsgemäßen Herstellung einer Rastverbindung zwischen mindestens zwei Bauelementen und/oder Bauelementegruppen, beispielsweise zweier oder mehrerer Bauelemente oder Bauelementegruppen einer Kraftfahrzeugleuchte, besteht zumindest in einer Grundform im Wesentlichen aus fünf Verfahrensschritten I, II, III, IV, Va), Vb).

In einem ersten Verfahrensschritt I sieht das Verfahren eine Erfassung mindestens eines bei einer ordnungsgemäßen Herstellung wenigstens einer Rastverbindung entstehenden Rastgeräuschs vor.

In einem anschließenden zweiten Verfahrensschritt II erfolgt eine Speicherung des mindestens einen im ersten Verfahrensschritt I erfassten Rastgeräuschs.

In einem dritten Verfahrensschritt III erfolgt eine Überwachung des Verbindens zweier oder mehrerer mit korrespondierenden Rastelementen wenigstens einer Rastverbindung versehener Bauelemente und/oder Bauelementegruppen unter Erfassung der dabei entstehenden und/oder vorhandenen Geräusche.

Die Erfassung des zumindest einen Rastgeräuschs im ersten Verfahrensschritt I und die Erfassung der beim Verbinden der mit korrespondierenden Rastelementen der wenigstens einen Rastverbindung versehenen Bauelemente und/oder Bauelementegruppen entstehenden und/oder vorhandenen Geräusche im dritten Verfahrensschritt III kann mit den selben Mitteln am selben Ort unter Verwendung der selben Bauteile bzw. Bauelementegruppen erfolgen. Als geeignetes Mittel zur Erfassung der Geräusche kommt beispielsweise mindestens ein akustischer Sensor bestehend aus beispielsweise einem oder mehreren Mikrofonen in Frage.

In einem vierten Verfahrensschritt IV findet ein Vergleich zumindest eines Teils der bei der Überwachung erfassten Geräusche mit dem mindestens einen gespeicherten Rastgeräusch statt.

Stimmt zumindest ein zum Vergleich herangezogener Teil der bei der Überwachung im dritten Verfahrensschritt III erfassten Geräusche mit dem mindestens einen im ersten Verfahrensschritt I erfassten und im zweiten Verfahrensschritt II gespeicherten Rastgeräusch überein, so steht in einem fünften Verfahrensschritt V a) als Ergebnis des Vergleichs fest, dass die im dritten Verfahrensschritt III überwachte Herstellung der mindestens eine Rastverbindung umfassenden Verbindung zweier oder mehrerer Bauelemente und/oder Bauelementegruppen ordnungsgemäß erfolgte und die korrespondierenden Rastelemente der wenigstens einen Rastverbindung miteinander verrastet sind. Dieses Verrasten kann dabei je nach Ausgestaltung der Rastverbindung lösbar oder unlösbar erfolgt sein.

Liegt keine oder zumindest eine nur unvollständige bzw. nicht vollständige Übereinstimmung des zumindest zum Vergleich herangezogenen Teils der bei der Überwachung im dritten Verfahrensschritt III erfassten Geräusche mit dem mindestens einen im ersten Verfahrensschritt I erfassten und im zweiten Verfahrensschritt II gespeicherten Rastgeräusch vor, so steht in einem fünften Verfahrensschritt V b) als Ergebnis des Vergleichs fest, dass die im dritten Verfahrensschritt III überwachte Herstellung der mindestens eine Rastverbindung umfassenden Verbindung zweier oder mehrerer Bauelemente und/oder Bauelementegruppen nicht ordnungsgemäß und damit mangelhaft erfolgte und die korrespondierenden Rastelemente der wenigstens einen Rastverbindung nicht bestimmungsgemäß miteinander verrastet sind.

Eine optionale Ausgestaltung des Verfahrens sieht einen Verfahrensschritt VI vor, bei dem eine Filterung des im ersten Verfahrensschritt I erfassten und im zweiten Verfahrensschritt gespeicherten Rastgeräuschs und/oder der während der Überwachung im dritten Verfahrensschritt III erfassten Geräusche erfolgen kann. Wie durch die Pfeile A und B angedeutet, kann eine Filterung des Rastgeräuschs entweder direkt nach dem Erfassen des Rastgeräuschs im ersten Verfahrensschritt I und vor der Speicherung des Rastgeräuschs im zweiten Verfahrensschritt II erfolgen (Pfeil A), oder nach der Speicherung des Rastgeräuschs im zweiten Verfahrensschritt II und vor dem im vierten Verfahrensschritt IV stattfindenden Vergleich mit zumindest einem Teil der im dritten Verfahrensschritt III während der Überwachung erfassten Geräusche (Pfeil B). Bei dieser Filterung kann aus dem Rastgeräusch ein für die wenigstens eine Rastverbindung charakteristischer Anteil herausgefiltert werden, welcher Aneil dann unter Zwischenspeicherung (Pfeil A) oder nach der Zwischenspeicherung als charakteristisches Rastgeräusch zum im vierten Verfahrensschritt IV stattfindenden Vergleich herangezogen werden kann.

Alternativ oder zusätzlich kann wie durch die Pfeile C und D angedeutet in einem Verfahrensschritt VII vor dem im vierten Verfahrensschritt IV stattfindenden Vergleich eine Filterung auf die bei der Überwachung im dritten Verfahrensschritt III erfassten Geräusche angewandt werden. Die im Verfahrensschritt VII stattfindende Filterung kann beispielsweise:
- eine Unterdrückung von Umgebungsgeräuschen und/oder
- eine Unterdrückung der für die menschliche Sprache typischen Frequenzen und/oder
- eine Unterdrückung von Frequenzlagen und/oder Frequenzfolgen umfassen, welche außerhalb des Frequenzspektrums und/oder der Frequenzfolge des Rastgeräuschs oder des charakteristischen Rastgeräuschs liegen.

Eine weitere optionale Ausgestaltung des Verfahrens sieht in einem Verfahrensschritt VIII vor, das Ergebnis des Vergleichs auszugegeben. Das Ergebnis kann beispielsweise visuell ausgegeben werden. Beispielsweise kann im Verfahrensschritt VIII ein grünes Licht das Vorliegen des Ergebnisses des Verfahrensschritts V a) und ein rotes Licht das Vorliegen des Ergebnisses des Verfahrensschritts V b) signalisieren.

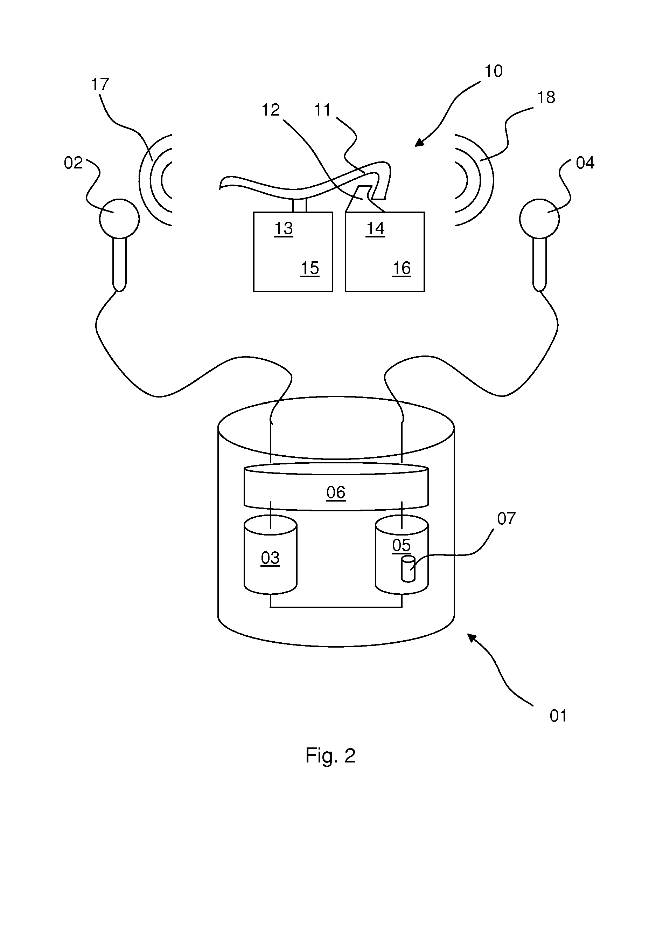

Eine in Fig. 2 dargestellte Vorrichtung 01 zur Durchführung eines in Fig. 1 dargestellten Verfahrens besteht im Wesentlichen aus:
- Mitteln 02 zur Erfassung zumindest eines während der Herstellung einer Rastverbindung 10 entstehenden Rastgeräuschs 17,
- Speichermittel 03 zur Speicherung des wenigstens einen Rastgeräuschs 17,
- Mittel 04 zur Erfassung der während des Verbindens zweier oder mehrerer mit korrespondierenden Rastelementen 11, 12 wenigstens einer Rastverbindung 10 versehener Bauelemente 13, 14 und/oder Bauelementegruppen 15, 16 entstehenden und/oder vorhandenen Geräusche 18, sowie
- Vergleichmitteln 05 zum Vergleich wenigstens eines Teils der erfassten Geräusche 18 mit mindestens einem gespeicherten Rastgeräusch 17. Die Vergleichsmittel 05 dienen dazu, um anhand einer Übereinstimmung wenigstens eines Teils der mit den Mitteln 04 während der Herstellung der die Rastverbindung 10 umfassenden Verbindung zwischen den Bauelementen 13, 14 bzw. Bauelementegruppen 15, 16 erfassten Geräusche 18 mit dem wenigstens einen in den Speichermitteln 03 gespeicherten Rastgeräuschs 17 ein ordnungsgemäßes Verrasten der Rastelemente 11, 12 der wenigstens einen Rastverbindung 10 und damit eine ordnungsgemäße Herstellung der Rastverbindung 10 festzustellen.

Die Rastverbindung 10 umfasst korrespondierende Rastelemente 11, 12, von denen wenigstens eines, in Fig. 2 das als Rastschwinge ausgeführte Rastelement 11 elastisch verformbar ist und bei der Herstellung der Rastverbindung 10 im Anschluss an eine Verformung mit mindestens einem anderen, hier dem als Rastnase bzw. Rastvorsprung mit Hintergreifung ausgeführten Rastelement 12, lösbar oder unlösbar verhakt.

Die Mittel 02 zur Erfassung zumindest eines während der Herstellung einer Rastverbindung 10 entstehenden Rastgeräuschs 17 und/oder die Mittel 04 zur Erfassung der während des Verbindens zweier oder mehrerer mit korrespondierenden Rastelementen 11, 12 wenigstens einer Rastverbindung 10 versehener Bauelemente 13, 14 und/oder Bauelementegruppen 15, 16 entstehenden und/oder vorhandenen Geräusche 18 umfassen beispielsweise mindestens einen akustischen Sensor der z.B. aus einem oder mehreren Mikrofonen bestehen kann.

Die Mittel 02 zur Erfassung zumindest eines während der Herstellung einer Rastverbindung 10 entstehenden Rastgeräuschs 17 können die Mittel 04 zur Erfassung der während des Verbindens zweier oder mehrerer mit korrespondierenden Rastelementen 11, 12 wenigstens einer Rastverbindung 10 versehener Bauelemente 13, 14 und/oder Bauelementegruppen 15, 16 entstehenden und/oder vorhandenen Geräusche 18 bilden, diese umfassen oder von diesen umfasst werden.

Die Vorrichtung 01 kann darüber hinaus Filtermittel 06 aufweisen, welche zur Filterung wenigstens eines charakteristischen Rastgeräuschs aus dem mindestens einen während der Herstellung einer Rastverbindung 10 entstehenden Rastgeräusch 17 und/oder zur Filterung der während des Verbindens zweier oder mehrerer mit korrespondierenden Rastelementen 11, 12 wenigstens einer Rastverbindung 10 versehener Bauelemente 13, 14 und/oder Bauelementegruppen 15, 16 entstehenden und/oder vorhandenen Geräusche 18 vorgesehen sein können. Die Filterung der während des Verbindens entstehenden und/oder vorhandenen Geräusche 18 kann beispielsweise im Hinblick auf eine Unterdrückung von Frequenzlagen und/oder Frequenzfolgen erfolgen, welche außerhalb des Frequenzspektrums und/oder der Frequenzfolge bzw. Frequenzfolgen des Rastgeräuschs 17 oder des charakteristischen Rastgeräuschs liegen.

Die Vergleichsmittel 05 können einen Mikroprozessor 07 umfassen, dem beispielsweise zumindest ein Teil der Speichermittel 03 und/oder von diesen unabhängige Speichermittel zugeordnet sein können. Der Mikroprozessor 07 ist mit den Mitteln 02 zur Erfassung zumindest eines während der Herstellung einer Rastverbindung 10 entstehenden Rastgeräuschs 17 und/oder mit den Mitteln 04 zur Erfassung der während des Verbindens zweier oder mehrerer mit korrespondierenden Rastelementen 11, 12 wenigstens einer Rastverbindung 10 versehener Bauelemente 13, 14 und/oder Bauelementegruppen 15, 16 entstehenden und/oder vorhandenen Geräusche 18 sowie mit den Speichermitteln 03 verbunden. Der Mikroprozessor 07 kann computerlesbare Programmmittel eines Computerprogrammprodukts ausführen, welche bei Ausführung des Computerprogrammprodukts auf dem Mikroprozessor 07 mit zugehörigen Speichermitteln 03 oder von diesen unabhängigen Speichermitteln den Mikroprozessor 07 zur Durchführung eines zuvor beschriebenen und in seinem Ablauf in Fig. 1 schematisch dargestellten Verfahrens veranlasst.

Wichtig ist hervorzuheben, dass die Erfindung sowohl in einem manuellen Fertigungsprozess, als auch in einer z.B. wenigstens teilautomatisierten Fertigungsumgebung verwendet werden kann und bei der auch als Verklipsen bezeichneten Herstellung von Rastverbindungen zwischen zwei oder mehreren bevorzugt als Kunststoffteile ausgeführten bzw. aus Kunststoffteilen bestehenden Bauelementen und/oder Bauelementegruppen Anwendung finden kann. Der Einsatz der Erfindung ist dabei nicht auf die Herstellung von Kraftfahrzeugleuchten beschränkt.

Die Erfindung ist vorzugsweise in einer beispielsweise zumindest teilautomatisierten Fertigungsumgebung insbesondere im Bereich der Herstellung von Rastverbindungen zwischen mindestens zwei Bauteilen und/oder Bauteilgruppen, wie sie beispielsweise bei Kraftfahrzeugkomponenten, wie etwa Kraftfahrzeugleuchten, Verwendung finden, gewerblich anwendbar.

### Bezugszeichenliste

- 01: Vorrichtung
- 02: Mittel zur Erfassung eines Rastgeräuschs
- 03: Speichermittel
- 04: Mittel zur Erfassung von Geräuschen
- 05: Vergleichsmittel
- 06: Filtermittel
- 07: Mikroprozessor
- 10: Rastverbindung
- 11: Rastelement
- 12: Rastelement
- 13: Bauelement
- 14: Bauelement
- 15: Bauelementegruppe
- 16: Bauelementegruppe
- 17: Rastgeräusch
- 18: Geräusche

## Patentansprüche

1. Verfahren zur Kontrolle einer ordnungsgemäßen Herstellung einer Rastverbindung (10) zwischen mindestens zwei Bauelementen (13, 14) und/oder Bauelementegruppen (15, 16),
**gekennzeichnet durch** die Verfahrensschritte:
- Erfassung mindestens eines bei einer ordnungsgemäßen Herstellung wenigstens einer Rastverbindung (10) entstehendes Rastgeräuschs (17),
- Speicherung des mindestens einen Rastgeräuschs (17),
- Überwachung des Verbindens zweier oder mehrerer mit korrespondierenden Rastelementen (11, 12) wenigstens einer Rastverbindung (10) versehener Bauelemente (13, 14) und/oder Bauelementegruppen (15, 16) unter Erfassung der dabei entstehenden und/oder vorhandenen Geräusche (18),
- Vergleich zumindest eines Teils der bei der Überwachung erfassten Geräusche (18) mit dem mindestens einen gespeicherten Rastgeräusch (17), wobei bei einer Übereinstimmung zumindest eines Teils der bei der Überwachung erfassten Geräusche (18) mit dem mindestens einen gespeicherten Rastgeräusch (17) das Ergebnis des Vergleichs eine ordnungsgemäße Herstellung der wenigstens einen Rastverbindung (10) ist.

2. Verfahren nach Anspruch 1,
**dadurch gekennzeichnet,**
**dass** aus dem Rastgeräusch (17) ein für die wenigstens eine Rastverbindung (10) charakteristischer Anteil herausgefiltert und dieser dann als charakteristisches Rastgeräusch zum Vergleich herangezogen wird.

3. Verfahren nach Anspruch 1 oder 2,
**dadurch gekennzeichnet,**
**dass** die erfassten Geräusche (18) vor dem Vergleich gefiltert werden.

4. Verfahren nach Anspruch 3
**dadurch gekennzeichnet,**
**dass** die Filterung
- eine Unterdrückung von Umgebungsgeräuschen und/oder
- eine Unterdrückung der für die menschliche Sprache typischen Frequenzen und/oder
- eine Unterdrückung von Frequenzlagen und/oder Frequenzfolgen, welche außerhalb des Frequenzspektrums und/oder der Frequenzfolge des Rastgeräuschs (17) oder des charakteristischen Rastgeräuschs liegen, umfasst.

5. Verfahren nach einem der vorhergehenden Ansprüche,
**dadurch gekennzeichnet,**
**dass** Geräusche (18) während der Überwachung erst erfasst werden, wenn die miteinander zu verbindenden Bauelemente (13, 14) und/oder Bauelementegruppen (15, 16) beim Zusammenführen einen bestimmten Mindestabstand unterschreiten

6. Verfahren nach einem der vorhergehenden Ansprüche,
**dadurch gekennzeichnet,**
**dass** das Ergebnis des Vergleichs ausgegeben wird.

7. Verfahren nach Anspruch 6,
**dadurch gekennzeichnet,**
**dass** das Ergebnis visuell ausgegeben wird.

8. Verfahren nach Anspruch 7,
**gekennzeichnet durch**,
eine Anzeige einer ordnungsgemäßen Herstellung der wenigstens einen Rastverbindung (10) **durch** ein grünes Licht.

9. Verfahren nach einem der vorhergehenden Ansprüche,
**gekennzeichnet durch**
eine Anzeige einer mangelhaften Herstellung der wenigstens einen Rastverbindung (10) **durch** ein rotes Licht.

10. Vorrichtung (01) zur Durchführung eines Verfahrens nach einem der vorhergehenden Ansprüche,
**gekennzeichnet durch**
- Mittel (02) zur Erfassung zumindest eines während der Herstellung einer Rastverbindung (10) entstehenden Rastgeräuschs (17),
- Speichermittel (03) zur Speicherung des wenigstens einen Rastgeräuschs (17),
- Mittel (04) zur Erfassung der während des Verbindens zweier oder mehrerer mit korrespondierenden Rastelementen (11, 12) wenigstens einer Rastverbindung (10) versehener Bauelemente (13, 14) und/oder Bauelementegruppen (15, 16) entstehenden und/oder vorhandenen Geräusche (18), sowie
- Vergleichmittel (05) zum Vergleich wenigstens eines Teils der erfassten Geräusche (18) mit mindestens einem gespeicherten Rastgeräusch (17), um anhand einer Übereinstimmung ein ordnungsgemäßes Verrasten der Rastelemente (11, 12) der wenigstens einen Rastverbindung (10) und damit eine ordnungsgemäße Herstellung der Rastverbindung (10) festzustellen.

11. Vorrichtung nach Anspruch 10,
**dadurch gekennzeichnet,**
**dass** die Mittel (02) zur Erfassung zumindest eines während der Herstellung einer Rastverbindung (10) entstehenden Rastgeräuschs (17) und/oder die Mittel (04) zur Erfassung der während des Verbindens zweier oder mehrerer mit korrespondierenden Rastelementen (11, 12) wenigstens einer Rastverbindung (10) versehener Bauelemente (13, 14) und/oder Bauelementegruppen (15, 16) entstehenden und/oder vorhandenen Geräusche (18) mindestens einen akustischen Sensor umfassen.

12. Vorrichtung nach Anspruch 10 oder 11,
**dadurch gekennzeichnet,**
**dass** die Mittel (02) zur Erfassung zumindest eines während der Herstellung einer Rastverbindung (10) entstehenden Rastgeräuschs (17) die Mittel (04) zur Erfassung der während des Verbindens zweier oder mehrerer mit korrespondierenden Rastelementen (11, 12) wenigstens einer Rastverbindung (10) versehener Bauelemente (13, 14) und/oder Bauelementegruppen (15, 16) entstehenden und/oder vorhandenen Geräusche (18) bilden, diese umfassen oder von diesen umfasst werden.

13. Vorrichtung nach Anspruch 10, 11 oder 12,
**gekennzeichnet durch**
Filtermittel (06) zur Filterung wenigstens eines charakteristischen Rastgeräuschs aus dem mindestens einen während der Herstellung einer Rastverbindung (10) entstehenden Rastgeräusch (17) und/oder zur Filterung der während des Verbindens zweier oder mehrerer mit korrespondierenden Rastelementen (11, 12) wenigstens einer Rastverbindung (109 versehener Bauelemente (13, 14) und/oder Bauelementegruppen (15, 16) entstehenden und/oder vorhandenen Geräusche (18).

14. Vorrichtung nach einem der Ansprüche 10 bis 13,
**gekennzeichnet durch**
einen mit den Mitteln (02, 04) zur Erfassung zumindest eines während der Herstellung einer Rastverbindung (10) entstehenden Rastgeräuschs (17) und/oder der während des Verbindens zweier oder mehrerer mit korrespondierenden Rastelementen (11, 12) wenigstens einer Rastverbindung (10) versehener Bauelemente (13, 14) und/oder Bauelementegruppen (15, 16) entstehenden und/oder vorhandenen Geräusche (18) sowie mit den Speichermitteln (03) und den Vergleichsmitteln (05) verbundenen Mikroprozessor (07), welcher computerlesbare Programmmittel eines Computerprogrammprodukts ausführen kann, welche bei Ausführung des Computerprogrammprodukts auf dem Mikroprozessor (07) mit zugehörigen Speichermitteln diesen zur Durchführung eines Verfahrens nach einem der Ansprüche 1 bis 9 veranlasst.

15. Vorrichtung nach Anspruch 14,
**dadurch gekennzeichnet,**
**dass** der Mikroprozessor (07) die Vergleichsmittel (05) bildet, diese umfasst oder von diesen umfasst wird.
